# EUROPÄISCHE PATENTSCHRIFT

(11) **EP 4 042 540 B1**
(45) Veröffentlichungstag und Bekanntmachung des Hinweises auf die Patenterteilung: **03.06.2026**
(21) Anmeldenummer: 20772283.6
(22) Anmeldetag: 15.09.2020
(51) Int. Cl.: H02J 7/02, B60L 53/22, H02M 3/335, H02M 7/219

(54) **LADEGERÄT UND VERFAHREN ZUM BETRIEB DES LADEGERÄTES**
CHARGING DEVICE AND METHOD FOR OPERATING THE CHARGING DEVICE
DISPOSITIF DE CHARGE ET PROCÉDÉ DE COMMANDE DU DISPOSITIF DE CHARGE

(30) Priorität: 11.10.2019 DE 102019215645
(43) Veröffentlichungstag der Anmeldung: 17.08.2022
(73) Patentinhaber: Robert Bosch GmbH, 70442 Stuttgart (DE)
(72) Erfinder: PLUM, Thomas, 50937 Koeln (DE)
(86) Internationale Anmeldenummer: PCT/EP2020/075752
(87) Internationale Veröffentlichungsnummer: WO 2021/069183

(56) Entgegenhaltungen:
- EP-A1- 3 410 593
- EP-A2- 1 248 356
- US-A- 5 592 367
- US-A- 5 940 280
- US-A- 5 986 908
- US-A1- 2016 065 079

## Beschreibung

Die Erfindung betrifft ein Ladegerät und ein Verfahren zum Betrieb des Ladegerätes. Ferner betrifft die Erfindung einen Antriebsstrang mit einem Ladegerät, ein Fahrzeug mit einem Antriebsstrang sowie ein Computerprogramm und ein maschinenlesbares Speichermedium.

### Stand der Technik

Ladegeräte, beispielsweise in Fahrzeugen mit einem elektrischen Antrieb in einem Elektrofahrzeug oder einem Hybridfahrzeug, dienen zum Nachladen von Batterien, bevorzugt Akkumulatoren oder Traktionsbatterien, aus einer elektrischen Energiequelle, bevorzugt Wechselstromquellen oder dem öffentlichen Wechselstromnetz. Entsprechende Ladegeräte offenbaren die Druckschriften US 5 940 280 A, US 2016/065079 A1 und EP 1 248 356 A2. Ein Ladegerät wandelt sinusförmigen Wechselstrom der Energiequelle in einen Gleichstrom um. Bei einem einphasigen Wechselstrom pulsiert die Leistung mit der doppelten Frequenz des Wechselstroms.

Ladegeräte weisen bevorzugt eine zweistufige Leistungselektronik auf. Eine erste Stufe formt den sinusförmigen Eingangsstrom aus dem Wechselstromnetz, die so genannte Power-Factor-Correction (PFC)-Stufe. Eine zweite Stufe besteht aus einem DC/DC Wandler, der die galvanische Trennung über einen Transformator sicherstellt und die Spannungsebenen anpasst, bevorzugt mittels einer elektrischen Schaltung und einer Regelung die Ausgangsspannung oder den Ausgangsstrom einstellt. Zwischen beiden Stufen ist ein Zwischenkreiskondensator angeordnet, der die Leistungspulsation in der doppelten Frequenz des Wechselstroms der Energiequelle puffert. Typischerweise wird dieser Zwischenkreis durch einen Elektrolytkondensator realisiert. Diese Topologien ermöglichen die Aufrechterhaltung eines nahezu sinusförmigen Eingangsstroms auf der Netzseite zur Erfüllung netzseitiger Normen, eine galvanische Trennung zwischen Netz und Fahrzeug zur Erfüllung von Sicherheitsanforderungen und Bereitstellung eines konstanten Ausgangsgleichstroms auf der Seite der Batterie, um die Belastung der Batterie im Ladebetrieb zu minimieren.

Ausgehend von dieser zweistufigen Schaltungstopologie und deren Eigenschaften besteht der Bedarf nach vereinfachten Schaltungstopologien für kompakte und leichtere Ladegeräte, bevorzugt für Elektrofahrzeuge.

### Offenbarung der Erfindung

Es wird ein Ladegerät bereitgestellt mit einem eingangsseitigen ersten Anschluss zur Verbindung mit einer elektrischen Energiequelle, einem ausgangsseitigen zweiten Anschluss zur Verbindung mit einer zu ladenden Batterie und einem Transformator, dessen Primärwicklung über eine Primärschaltung mit dem ersten Anschluss elektrisch verbunden ist und dessen Sekundärwicklung über eine Sekundärschaltung mit dem zweiten Anschluss elektrisch verbunden ist.

Die Primärschaltung umfasst eine Gleichrichtungsschaltung und eine Parallelschaltung von zwei Zweigen mit jeweils einem Highside-Element und einem Lowside-Element. Ein erster Zweig umfasst einen ersten und einen zweiten in Reihe geschalteten Kondensator und einen ersten Mittelabgriff zwischen den Kondensatoren, welcher mit einem ersten Anschlusspol der Primärwicklung verbunden ist. Ein zweiter Zweig umfasst ein in Reihe geschaltetes erstes Lowside-Schaltelement und ein zweites in Reihe geschaltetes Highside-Schaltelement mit einem zweiten Mittelabgriff zwischen den Schaltelementen, welcher mit einem zweiten Anschlusspol der Primärwicklung verbunden ist,
wobei die intrinsischen Dioden des ersten und des zweiten Schaltelementes derart ausgerichtet sind, dass ein Strom von Lowside zu Highside des zweiten Zweiges ermöglicht wird.

Die Sekundärschaltung umfasst eine Parallelschaltung von zwei Zweigen, dem dritten und dem vierten Zweig, mit jeweils einem Highside-Element und einem Lowside-Element.

Der dritte Zweig umfasst eine Reihenschaltung einer ersten Highside-Diode und eines dritten Lowside-Schaltelementes mit einem dritten Mittelabgriff zwischen der ersten Diode und dem dritten Schaltelement, welcher mit einem zweiten Anschlusspol der Sekundärwicklung verbunden ist, wobei die erste Diode und die intrinsische Diode des dritten Schaltelementes derart ausgerichtet sind, dass ein Strom von Lowside zu Highside des dritten Zweiges ermöglicht wird. Der vierte Zweig umfasst eine Reihenschaltung einer zweiten Highside-Diode und eines vierten Lowside-Schaltelementes mit einem vierten Mittelabgriff zwischen der zweiten Diode und dem vierten Schaltelement, welcher mit einem ersten Anschlusspol der Sekundärwicklung verbunden ist, wobei die zweite Diode und die intrinsische Diode des vierten Schaltelementes derart ausgerichtet sind, dass ein Strom von Lowside zu Highside des vierten Zweiges ermöglicht wird. Ein erster Anschlusspol des zweiten Anschlusses ist mit den Kathoden der ersten und zweiten Diode und ein zweiter Anschlusspol des zweiten Anschlusses mit den dritten und vierten Schaltelementen an den Enden des dritten und vierten Zweiges verbunden.

Eine elektrische Energiequelle ist bevorzugt ein einphasiges Wechselstromnetz, bevorzugt des öffentlichen Niederspannungsnetzes. Eine zu ladende Batterie ist bevorzugt ein Akkumulator oder eine Traktionsbatterie, mittels derer Energie ein elektrischer Antriebstrang eines Fahrzeugs betrieben wird. Eine Gleichrichtungsschaltung ist bevorzugt ein Gleichrichter zur Wandlung des Wechselstroms in einen Gleichstrom. Ein Zweig einer Parallelschaltung mit einem Highside-Element und einem Lowside-Element ist bevorzugt eine Halbbrücke mit zwei elektrischen, passiven und/ oder aktiven Bauelementen und einem Mittelabgriff zwischen den Bauelementen. Der Mittelabgriff der Halbbrücke wird über die Bauelemente mit elektrischer Energie versorgt, wobei ein erstes Bauelement auf einer ersten Seite des Mittelabgriffs als Highside und ein zweites Bauelement auf der anderen Seite des Mittelabgriffs als Lowside Bauelement bezeichnet wird. Schaltelemente sind bevorzugt Leistungshalbleiterschalter, welche eine intrinsische Diode umfassen, bevorzugt IGBTs oder MOSFETs. Bevorzugt bedeutet die Formulierung, Verbinden von bspw. einem Mittelabgriff mit einem Anschlusspol, das Anschließen, Kontaktieren oder Verbinden der Bauteile mittels einer elektrisch leitfähigen Leitung oder einer galvanischen Verbindung.

Vorteilhaft wird eine vereinfachte Schaltungsanordnung eines Ladegerätes bereitgestellt, welche einen nahezu sinusförmigen Eingangsstrom auf der Netzseite, eine galvanische Trennung zwischen Netz und Fahrzeug und einen konstanten Ausgangsgleichstrom ermöglicht. Dies wird mit einer minimalen Anzahl von Bauelementen realisiert, was eine kostengünstige Herstellung eines auf dieser Topologie basierenden Ladegeräts ermöglicht. Es werden lediglich nur 4 Schaltelemente, bevorzugt aktive Halbleiterschalter verwendet, die bevorzugt im zero-voltage switching (ZVS) und/oder zero-current switching (ZCS) betrieben werden. Dadurch ergeben sich geringe Schaltverluste, was eine hohe Schaltfrequenz ermöglicht. Dies erlaubt die Verwendung kleiner passiver Bauelemente. Bevorzugt ist der Ansteueraufwand (Treiber, Logik, Prozessor) durch die geringe Anzahl der schaltenden Bauelemente deutlich reduziert. Es wird bevorzugt nur ein induktives Bauelement verwendet: Die Topologie verwendet bevorzugt nur eine gekoppelte Drossel sowohl als Transformator als auch als PFC-Induktivität. Bevorzugt wird der Transformator als Bauteil zur galvanischen Trennung und als PFC-Induktivität für das Ladegerät verwendet. Dies führt zu einem reduzierten Volumen des Ladegerätes.

In einer anderen Ausgestaltung der Erfindung umfasst die Gleichrichtungsschaltung eine in Reihe geschaltete dritte Highside-Diode und eine vierte Lowside-Diode mit einem fünften Mittelabgriff zwischen den Dioden, welcher mit einem ersten Anschlusspol des ersten Anschlusses verbunden ist, wobei die in Reihe geschaltete dritte Highside-Diode und vierte Lowside-Diode dem ersten und zweiten Kondensator parallelgeschaltet ist und wobei die dritte und die vierte Diode derart ausgerichtet sind, dass ein Strom von Lowside zu Highside ermöglicht wird und wobei der erste Mittelabgriff zwischen den Kondensatoren mit einem zweiten Anschlusspol des ersten Anschlusses verbunden ist.

Die einfache Reihenschaltung der Dioden ermöglicht lediglich den Stromfluss aus der Energiequelle in der gewünschten Richtung in die Primärschaltung.

Vorteilhaft wird eine einfache Gleichrichtungsschaltung für eine vereinfachte Schaltungsanordnung eines Ladegerätes bereitgestellt, welches einen nahezu sinusförmigen Eingangsstrom auf der Netzseite, eine galvanische Trennung zwischen Netz und Fahrzeug und einen konstanten Ausgangsgleichstrom ermöglicht.

In einer anderen Ausgestaltung der Erfindung umfasst die Gleichrichtungsschaltung einen Brückengleichrichter mit vier Dioden, welcher eingangsseitig mit einem ersten Anschlusspol und einem zweiten Anschlusspol des ersten Anschlusses verbunden ist, und ausgangsseitig zum zweiten Kondensator parallelgeschaltet ist.

Der Brückengleichrichter ermöglicht den Stromfluss aus einer Energiequelle in die Primärschaltung unabhängig von dessen Richtung. Aufgrund der Zweiweggleichrichtung sind die Halbschwingungen der (Wechselstrom-)Energiequelle im Gleichstromkreis der Primärschaltung gleich gepolt.

Vorteilhaft wird eine alternative Gleichrichtungsschaltung für eine vereinfachte Schaltungsanordnung eines Ladegerätes bereitgestellt, welches einen nahezu sinusförmigen Eingangsstrom auf der Netzseite, eine galvanische Trennung zwischen Netz und Fahrzeug und einen konstanten Ausgangsgleichstrom ermöglicht.

In einer anderen Ausgestaltung der Erfindung ist der Primärschaltung ein weiterer fünfter Zweig parallelgeschaltet, welcher einen dritten Kondensator umfasst. Bevorzugt ist dieser dritte Kondensator ein Elektrolytkondensator, welcher die pulsierende Leistung (doppelte Netzfrequenz) in der Primärschaltung puffert. Vorteilhaft wird eine optimierte Primärschaltung für ein vereinfachtes Ladegerät bereitgestellt.

In einer anderen Ausgestaltung der Erfindung ist zwischen den vierten Mittelabgriff und den ersten Anschlusspol der Sekundärwicklung ein vierter Kondensator geschaltet. Bevorzugt ist dieser vierte Kondensator ein Folien- oder Keramikkondensator, der dazu ausgelegt ist, netzfrequente Spannungsanteile zu kompensieren.

Vorteilhaft wird eine optimierte Sekundärschaltung für ein vereinfachtes Ladegerät bereitgestellt.

Ferner betrifft die Erfindung einen Antriebsstrang eines Fahrzeugs mit einem Wechselrichter und einer elektrischen Maschine, wobei der Antriebstrang mindestens ein Ladegerät, wie oben beschrieben, umfasst. Vorteilhaft wird ein Antriebsstrang eines elektrischen Fahrzeugs mit einem Ladegerät mit einer vereinfachten Schaltungstopologie bereitgestellt.

Ferner betrifft die Erfindung ein Fahrzeug mit einem Antriebsstrang, wie oben beschrieben.

Vorteilhaft wird ein Fahrzeug mit einem Ladegerät mit einer vereinfachten Schaltungstopologie bereitgestellt.

Ferner betrifft die Erfindung ein Verfahren zum Betrieb eines wie oben vorgestellten Ladegerätes mit den Schritten: Abwechselndes Ein- und Ausschalten des zweiten und des ersten Schaltelementes, wobei bei eingeschaltetem ersten Schaltelement das vierte Schaltelement mindestens einmal eingeschaltet und ausgeschaltet wird, wobei bei eingeschaltetem zweiten Schaltelement das dritte Schaltelement mindestens einmal eingeschaltet und ausgeschaltet wird.

Mittels des abwechselnden Ein- und Ausschaltens des zweiten und des ersten Schaltelementes wird bei positiver Spannung der Energiequelle abwechselnd die Primärwicklung oder Hauptinduktivität und der dritte Kondensator oder der Elektrolytkondensator geladen. Bei negativer Netzspannung tauschen die Bauelemente ihre Rollen, sodass ebenso die Primärwicklung und der dritte Kondensator geladen wird. Es liegt ein Hochsetzstellerbetrieb vor. Die vorgebbare Schaltfrequenz des ersten und zweiten Schaltelementes ist dabei deutlich größer als die Wechselstromfrequenz der Energiequelle, sodass während einer Phase einer positiven Netzspannung oder einer negativen Netzspannung das erste und das zweite Schaltelement S1, S2 vielfach ein und ausgeschaltet werden. Zur Vermeidung eines Kurzschlusses werden das erste und das zweite Schaltelement S1 und S2 niemals gleichzeitig eingeschaltet und bevorzugt eine Totzeit eingehalten nach dem Ausschalten eines Schaltelementes und vor dem Einschalten eines anderen Schaltelementes. Mittels Variation des Tastgrads des ersten und/ oder zweiten Schaltelementes wird der Eingangsstrom geregelt. Mittels des mindestens einfachen Ein- und Ausschalten des vierten Schaltelementes während das erste Schaltelement eingeschaltet ist, nimmt die Sekundärspule Energie auf. Mittels des mindestens einfachen Ein- und Ausschalten des dritten Schaltelementes während das zweite Schaltelement eingeschaltet ist, wird die Energie aus der Sekundärspule an den Ausgangsanschlüssen bereitgestellt. Es liegt ebenfalls ein Hochsetzstellerbetrieb vor. Mittels Variation des Tastgrads des dritten und/ oder vierten Schaltelementes wird der Ausgangsstrom und/ oder die Ausgangsspannung geregelt.

Die Hauptinduktivität des Transformators dient als PFC Drossel. Es werden vier Schaltzustände unterschieden. Das erste und das zweite Schaltelement S1 und S2 werden immer alternierend mit einem definierten duty-cycle geschaltet. Zwischen dem Ausschalten des ersten und zweiten Schaltelementes S1 bzw. S2 und dem Einschalten des zweiten und ersten Schaltelementes S2 bzw. S1 werden Totzeiten vorgehalten, um ein passives Kommutieren des Stromes zu ermöglichen bzw. um einen Brückenkurzschluss sicher zu verhindern. Solange die Netzspannung positiv ist, ist die dritte Highside-Diode in dieser Phase dauerhaft leitend, wird also nur mit Netzfrequenz betrieben. Somit liegt die Netzspannung auch am ersten Kondensator oder oberen Kondensator der Kondensatorhalbbrücke an. Zunächst wird das zweite Schaltelement S2 eingeschaltet. Die Netzspannung wird über die Hauptinduktivität des Transformators angelegt und es ergibt sich ein steigender Strom durch den Transformator. Anschließend wird das zweite Schaltelement S2 abgeschaltet. Der Strom kommutiert passiv auf die rückwärtsleitende intrinsische Diode des ersten Schaltelementes S1, so dass dieses Schaltelement nach einer Totzeit mit ZVS eingeschaltet werden kann. Die Hauptinduktivität treibt sodann bevorzugt den Strom in den dritten Kondensator oder Elektrolytkondensator. Es handelt sich hierbei um einen Hochsetzstellerbetrieb. Dabei wird Energie in dem dritten Kondensator gespeichert. Nach einer gewissen Zeit wird das erste Schaltelement S1 abgeschaltet und das zweite Schaltelement S2 wieder eingeschaltet. Somit beginnt der beschriebene Zyklus erneut. Auf sehr ähnliche Weise funktioniert der Betrieb für negative Netzspannungen. Dabei tauschen alle Bauelemente ihre Rollen. Jetzt leitet die vierte Lowside-Diode. Wenn das erste Schaltelement S1 eingeschaltet ist, wird wieder ein Strom durch den Transformator (in derselben Richtung wie zuvor) aufgebaut. Nach dem Abschalten des ersten Schaltelementes S1 wird das zweite Schaltelement S2 mit ZVS eingeschaltet und dabei Energie an den dritten Kondensator geliefert. Auch dies ist ein Hochsetzstellerbetrieb. Durch das Abschalten des zweiten Schaltelementes S2 und das Einschalten des ersten Schaltelementes S1 beginnt der Zyklus erneut.

Bei eingeschalteten ersten Schaltelement S1 wird zur Spannungswandlung das vierte Schaltelement S4 eingeschaltet. Es baut sich ein steigender Strom über der Streuinduktivität des Transformators auf. Bevorzugt dient der vierte Kondensator oder die Serienkapazität auf der Sekundärseite des Wandlers als DC-Block und ist so groß dimensioniert, dass sich über eine Schaltperiode keine wesentliche Spannungsänderung ergibt. Nach dem Abschalten des vierten Schaltelementes kommutiert der Strom selbstständig auf die zweite Highside-Diode in diesem Zweig und liefert damit Strom an die angeschlossene Batterie. Sobald auf das erste Schaltelement S1 ausgeschaltet wird und das zweite Schaltelement S2 nach der Totzeit eingeschaltet wird, kommutiert der Strom mit steiler Rate von der Sekundärseite zurück auf die Primärseite. Jetzt wird das dritte Schaltelement S3 eingeschaltet. Der sekundärseitige Strom ändert sein Vorzeichen und fließt jetzt rückwärts durch das dritte Schaltelement S3 und das vierte Schaltelement S4. Nach einer gewissen Zeitdauer wird das dritte Schaltelement S3 abgeschaltet und der Strom kommutiert auf die entsprechende erste Highside-Diode und liefert Strom an die Batterie. Mit dem Einschalten des ersten Schaltelementes S1 und des vierten Schaltelementes S4 beginnt der Zyklus erneut.

Der Wandler wird bevorzugt im kontinuierlichen Betrieb betrieben, d.h. der Strom in der sekundärseitigen Streuinduktivität des Transformators weist keine Phasen auf, in denen dieser Null ist. Alle Schaltelemente werden im besonders verlustarmen ZVS geschaltet. Wird der Wandler im diskontinuierlichen Betrieb betrieben, so weist der sekundärseitige Transformatorstrom eine ausgeprägte Phase auf, in dem dieser Null ist. Es handelt sich also um einen lückenden Betrieb auf der Sekundärseite des Wandlers. In diesem Arbeitspunkt werden das erste, zweite und vierte Schaltelement S1, S2 und S4 mit ZVS geschaltet. Das dritte Schaltelement S3 schaltet mit ZCS gegen eine reduzierte Spannung ein. Auch dieser Betriebspunkt weißt geringe Schaltverluste auf und erlaubt damit ebenfalls eine hohe Schaltfrequenz.

Um jederzeit eine konstante Leistung an die Batterie übertragen zu können, dürfen die Tastgrade des ersten und des zweiten Schaltelementes S1, S2 gewisse minimale und maximale Grenzen nicht unter- bzw- überschreiten. Daraus ergibt sich, dass der Wandler nur bis zu einer minimalen Eingangsspannung Strom aus dem Netz aufnehmen kann. Daher weist der der Energiequelle entnommene Strom im Bereich des Nulldurchgangs der Spannung der Energiequelle Bereiche auf, in denen dieser Null ist und dritte und die vierte Diode der Diodenhalbbrücke gleichzeitig sperren.

Vorteilhaft wird ein Verfahren bereitgestellt mit dem die Schaltelemente des Ladegerätes so angesteuert werden, dass eine Energieübertragung durch das Ladegerät von einer angeschlossenen Energiequelle zu einer angeschlossenen Batterie erfolgt.

Ferner betrifft die Erfindung ein Computerprogramm, das eingerichtet ist, das beschriebene Verfahren auszuführen.

Ferner betrifft die Erfindung ein maschinenlesbares Speichermedium, auf dem das beschriebene Computerprogramm gespeichert ist.

Es versteht sich, dass die Merkmale, Eigenschaften und Vorteile des Ladegeräts entsprechend auf das Verfahren bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   eine schematische Darstellung einer ersten Ausführungsform Schaltungstopologie für ein Ladegerät
Figur 2
   eine schematische Darstellung einer zweiten Ausführungsform einer Schaltungstopologie für ein Ladegerät,
Figur 3
   eine schematische Darstellung einer dritten Ausführungsform einer Schaltungstopologie für ein Ladegerät,
Figur 4
   ein schematisch dargestelltes Fahrzeug mit einem Antriebsstrang mit einem Ladegerät,
Figur 5
   ein schematisch dargestelltes Ablaufdiagramm für ein Verfahren zum Betrieb eines Ladegeräts

### Ausführungsformen der Erfindung

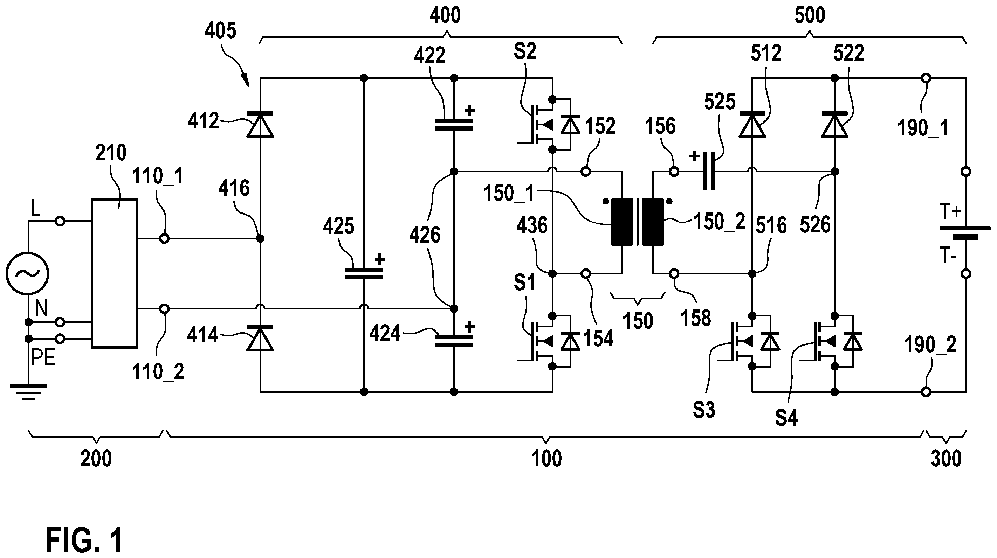

Die Figur 1 zeigt ein Ladegerät 100, welches im Betrieb an einem eingangsseitigen ersten Anschluss 110_1, 110_2 mit einer Energiequelle 200 und an einem ausgangsseitigen zweiten Anschluss 190_1, 190_2 mit einer zu ladenden Batterie 300 elektrisch verbunden ist. Die Energiequelle 200, mittels derer Energie die Batterie aufgeladen soll, ist bevorzugt eine einphasige Wechselstromquelle, beispielsweise das öffentliche Stromversorgungsnetz. Das Ladegerät umfasst eingangsseitig eine Primärschaltung 400 und eine ausgangsseitige Sekundärschaltung 500. Primär- und Sekundärschaltung sind die über die Primärwicklung 150_1 eines Transformators 150 und dessen Sekundärspule 150_2 miteinander, bevorzugt induktiv, verbunden, jedoch galvanisch getrennt. Die Primärschaltung umfasst eine Gleichrichtungsschaltung 405 und eine Parallelschaltung von zwei Zweigen mit jeweils einem Highside-Element, bevorzugt ein elektrisches Bauelement, welches Highside-seitig einer Halbbrücke angeordnet ist, und einem Lowside-Element, bevorzugt ein elektrisches Bauelement, welches Lowside-seitig der Halbbrücke angeordnet ist. Ein erster Zweig umfasst einen ersten und einen zweiten in Reihe geschalteten Kondensator 422, 424 und einen ersten Mittelabgriff 426 zwischen den Kondensatoren. Der erste Mittelabgriff 426 ist mit einem ersten Anschlusspol 152 der Primärwicklung 150_1 des Transformators verbunden. Ein zweiter Zweig umfasst ein in Reihe geschaltetes erstes Lowside-Schaltelement S1 und ein zweites in Reihe geschaltetes Highside-Schaltelement S2 mit einem zweiten Mittelabgriff 436 zwischen den Schaltelementen S1, S2. Der zweite Mittelabgriff 436 ist mit einem zweiten Anschlusspol 154 der Primärwicklung 150_1 verbunden. Die intrinsischen Dioden des ersten und des zweiten Schaltelementes S1, S2 sind derart ausgerichtet, dass ein Strom von Lowside zu Highside des zweiten Zweiges ermöglicht wird. Die Sekundärschaltung 500 umfasst eine Parallelschaltung von zwei Zweigen mit jeweils einem Highside-Element und einem Lowside-Element. Einer dieser Zweige, der dritte Zweig umfasst eine Reihenschaltung einer ersten Highside-Diode 512 und eines dritten Lowside-Schaltelementes S3 mit einem dritten Mittelabgriff 516 zwischen der ersten Diode und dem dritten Schaltelement. Der dritte Mittelabgriff 516 ist mit einem zweiten Anschlusspol 158 der Sekundärwicklung 150_2 des Transformator 150 verbunden. Die erste Diode 512 und die intrinsische Diode des dritten Schaltelementes S3 ist derart ausgerichtet, dass ein Strom von Lowside zu Highside des dritten Zweiges ermöglicht wird. Ein weiterer Zweig der Sekundärschaltung, der vierte Zweig, umfasst eine Reihenschaltung einer zweiten Highside-Diode 522 und eines vierten Lowside-Schaltelementes S4 mit einem vierten Mittelabgriff 526 zwischen der zweiten Diode 522 und dem vierten Schaltelement S4. Der vierte Mittelabgriff 526 ist mit einem ersten Anschlusspol 156 der Sekundärwicklung 150_2 des Transformators 150 verbunden. Die zweite Diode 522 und die intrinsische Diode des vierten Schaltelementes S4 sind derart ausgerichtet, dass ein Strom von Lowside zu Highside des vierten Zweiges ermöglicht wird. Ein erster Anschlusspol 190_1 des zweiten Anschlusses 190 ist mit den Kathoden der ersten und zweiten Diode 512, 522 und ein zweiter Anschlusspol 190_2 des zweiten Anschlusses 190 ist mit den dritten und vierten Schaltelementen S3, S4 an den Enden des dritten und vierten Zweiges verbunden. Die Gleichrichtungsschaltung 405 gemäß Figur 1 umfasst eine in Reihe geschaltete dritte Highside-Diode 412 und eine vierte Lowside-Diode 414 mit einem fünften Mittelabgriff 416 zwischen der dritten und vierten Diode 412, 414. Der fünfte Mittenabgriff ist mit einem ersten Anschlusspol 110_1 des ersten Anschlusses verbunden. Die in Reihe geschaltete dritte Highside-Diode 412 und vierte Lowside-Diode 414 sind dem ersten und zweiten Kondensator 422, 424 parallelgeschaltet. Die dritte und die vierte Diode sind derart ausgerichtet sind, dass ein Strom von Lowside zu Highside ermöglicht wird. Der erste Mittelabgriff 426 zwischen den Kondensatoren ist mit einem zweiten Anschlusspol 110_2 des ersten Anschlusses verbunden. Bevorzugt ist der Primärschaltung 400 ein weiterer fünfter Zweig parallelgeschaltet, welcher einen dritten Kondensator 425 umfasst. Weiter ist bevorzugt zwischen den vierten Mittelabgriff 526 und den ersten Anschlusspol 156 der Sekundärwicklung des Transformators 150 ein vierter Kondensator 525 geschaltet.

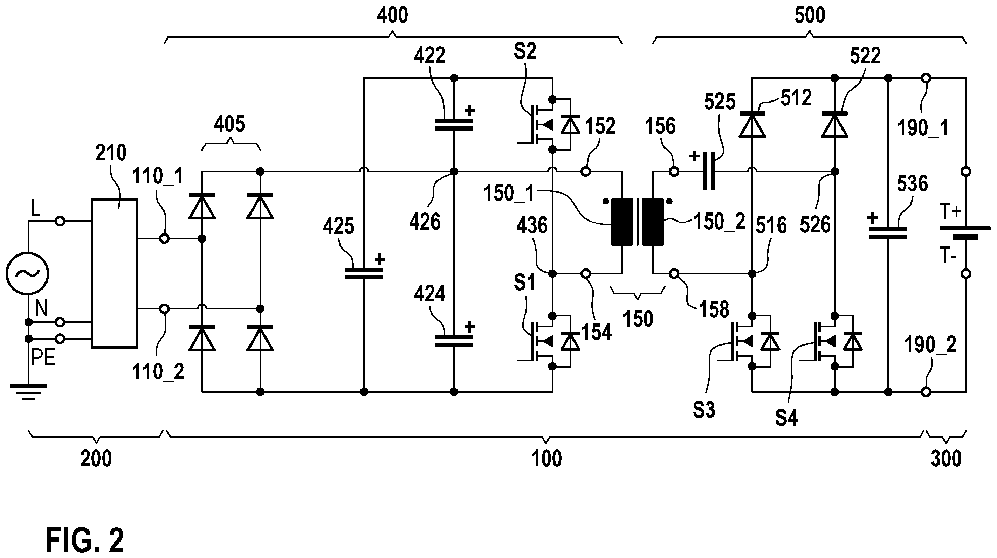

Figur 2 zeigt eine schematische Darstellung einer zweiten Ausführungsform einer Schaltungstopologie für ein Ladegerät. Die Schaltungstopologie und die Bezugszeichen entsprechen weitgehend der in Figur 1 gezeigten Schaltungstopologie. Im Folgenden wird nur auf die Unterschiede zu der in Figur 1 gezeigten Schaltungstopologie eingegangen. Die Gleichrichterschaltung 405 umfasst einen Brückengleichrichter mit vier Dioden. Eingangsseitig ist dieser mit einem ersten Anschlusspol 110_1 und einem zweiten Anschlusspol 110_2 des ersten Anschlusses verbunden und ausgangsseitig zum zweiten Kondensator 424 parallelgeschaltet. Bevorzugt ist der Sekundärschaltung 500 ein weiterer sechster Zweig parallelgeschaltet, welcher einen fünften Kondensator 536 umfasst. Insbesondere besteht im Unterschied zu der Topologie gemäß Figur 1 für beide Netzhalbwellen eine galvanische Verbindung nur mit dem zweiten Kondensator 424 besteht.

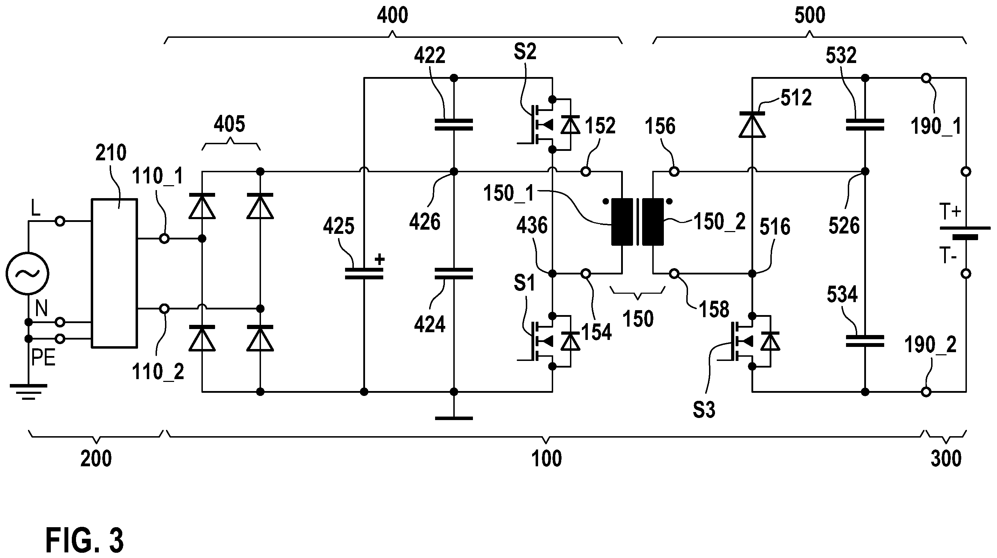

Figur 3 zeigt eine schematische Darstellung einer dritten Ausführungsform einer Schaltungstopologie für ein Ladegerät. Die Schaltungstopologie und die Bezugszeichen entsprechen weitgehend der in Figur 2 gezeigten Schaltungstopologie. Im Folgenden wird nur auf die Unterschiede zu der in Figur 2 gezeigten Schaltungstopologie eingegangen. Die Sekundärschaltung 500 des Ladegerätes 100 umfasst eine Parallelschaltung von zwei Zweigen mit jeweils einem Highside-Element und einem Lowside-Element. Einer dieser Zweige, der dritte Zweig umfasst eine Reihenschaltung einer ersten Highside-Diode 512 und eines dritten Lowside-Schaltelementes S3 mit einem dritten Mittelabgriff 516 zwischen der ersten Diode und dem dritten Schaltelement. Der dritte Mittelabgriff 516 ist mit einem zweiten Anschlusspol 158 der Sekundärwicklung 150_2 des Transformator 150 verbunden. Die erste Diode 512 und die intrinsische Diode des dritten Schaltelementes S3 ist derart ausgerichtet, dass ein Strom von Lowside zu Highside des dritten Zweiges ermöglicht wird. Ein weiterer Zweig der Sekundärschaltung, der vierte Zweig, umfasst eine Reihenschaltung eines sechsten Kondensators 532 und eines siebten Kondensators 534 mit einem vierten Mittelabgriff 526 zwischen dem sechsten und dem siebten Kondensator 532, 534. Der vierte Mittelabgriff 526 ist mit einem ersten Anschlusspol 156 der Sekundärwicklung 150_2 des Transformators 150 verbunden. Ein erster Anschlusspol 190_1 des zweiten Anschlusses 190 ist mit der Kathode der ersten Diode 512 und ein zweiter Anschlusspol 190_2 des zweiten Anschlusses 190 ist mit dem dritten Schaltelement S3 am Ende des dritten und vierten Zweiges verbunden.

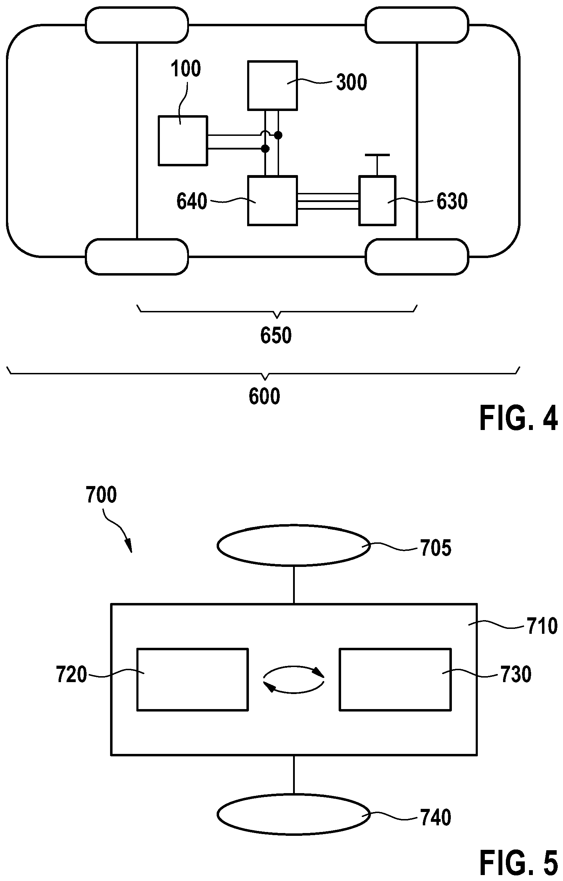

Die Figur 4 zeigt ein schematisch dargestelltes Fahrzeug 600 mit einem Antriebsstrang 650 mit einem Ladegerät 100. Das Fahrzeug 600 ist hier nur beispielhaft mit vier Rädern dargestellt, wobei die Erfindung gleichermaßen in beliebigen Fahrzeugen mit einer beliebigen Anzahl an Rädern zu Lande, zu Wasser und in der Luft einsetzbar ist. Der Beispielhaft dargestellte Antriebsstrang 650 umfasst mindestens ein Ladegerät 100. Weiter umfasst der Antriebsstrang bevorzugt eine Batterie 300, einen Wechselrichter 640 und eine elektrische Maschine 630.

Figur 5 zeigt ein schematisch dargestelltes Ablaufdiagramm für ein Verfahren 700 zum Betrieb eines Ladegeräts 100. Das Verfahren 700 startet mit dem Schritt 705. In Schritt 710 wird das das zweite und das erste Schaltelement abwechselnd ein- und ausgeschaltet. Bei eingeschaltetem ersten Schaltelement (720) wird das vierte Schaltelement mindestens einmal eingeschaltet und ausgeschaltet. Bei eingeschaltetem zweiten Schaltelement (730) wird das dritte Schaltelement mindestens einmal eingeschaltet und ausgeschaltet. Mit Schritt 740 endet das Verfahren.

## Patentansprüche

1. Ladegerät (100) mit:
einem eingangsseitigen ersten Anschluss (110_1, 110_2) zur Verbindung mit einer elektrischen Energiequelle (200),
einem ausgangsseitigen zweiten Anschluss (190_1, 190_2) zur Verbindung mit einer zu ladenden Batterie (300),
einem Transformator (150), dessen Primärwicklung (150_1) über eine Primärschaltung (400) mit dem ersten Anschluss (110_1, 110_2) elektrisch verbunden ist und dessen Sekundärwicklung (150_2) über eine Sekundärschaltung (500) mit dem zweiten Anschluss (190_1, 190_2) elektrisch verbunden ist,
wobei die Primärschaltung (400) eine Gleichrichtungsschaltung (405) und eine Parallelschaltung von zwei Zweigen mit jeweils einem Highside-Element und einem Lowside-Element umfasst mit:
einem ersten Zweig, welcher einen ersten und einen zweiten in Reihe geschalteten Kondensator (422, 424) umfasst mit einem ersten Mittelabgriff (426) zwischen den Kondensatoren, welcher mit einem ersten Anschlusspol (152) der Primärwicklung (150_1) verbunden ist,
einem zweiten Zweig, welcher ein in Reihe geschaltetes erstes Lowside-Schaltelement (S1) und ein zweites in Reihe geschaltetes Highside-Schaltelement (S2) umfasst mit einem zweiten Mittelabgriff (436) zwischen den Schaltelementen,
welcher mit einem zweiten Anschlusspol (154) der Primärwicklung (150_1) verbunden ist,
wobei die intrinsischen Dioden des ersten und des zweiten Schaltelementes (S1, S2) derart ausgerichtet sind, dass ein Strom von Lowside zu Highside ermöglicht wird,
**dadurch gekennzeichnet, dass**
die Sekundärschaltung (500) eine Parallelschaltung von zwei Zweigen mit jeweils einem Highside-Element und einem Lowside-Element umfasst mit:
einem dritten Zweig, welcher eine Reihenschaltung einer ersten Highside-Diode (512) und eines dritten Lowside-Schaltelementes (S3) umfasst mit einem dritten Mittelabgriff (516) zwischen der ersten Diode und dem dritten Schaltelement, welcher mit einem zweiten Anschlusspol (158) der Sekundärwicklung (150_2) verbunden ist,
wobei die erste Diode (512) und die intrinsische Diode des dritten Schaltelementes (S3) derart ausgerichtet sind, dass ein Strom von Lowside zu Highside ermöglicht wird,
einem vierten Zweig, welcher eine Reihenschaltung einer zweiten Highside-Diode (522) und eines vierten Lowside-Schaltelementes (S4) umfasst mit einem vierten Mittelabgriff (526) zwischen der zweiten Diode (522) und dem vierten Schaltelement (S4), welcher mit einem ersten Anschlusspol (156) der Sekundärwicklung (150_2) verbunden ist,
wobei die zweite Diode (522) und die intrinsische Diode des vierten Schaltelementes (S4) derart ausgerichtet sind, dass ein Strom von Lowside zu Highside ermöglicht wird,
wobei ein erster Anschlusspol (190_1) des zweiten Anschlusses (190_1, 190_2) mit den Kathoden der ersten und zweiten Diode (512, 522) und ein zweiter Anschlusspol (190_2) des zweiten Anschlusses (190_1, 190_2) mit den dritten und vierten Schaltelementen (S3, S4) an den Enden des dritten und vierten Zweiges verbunden ist,
wobei das Ladegerät (100) dazu eingerichtet ist,
im Betrieb abwechselnd das zweite und das erste Schaltelement (S2, S1) ein- und auszuschalten,
bei eingeschaltetem ersten Schaltelement (S1) das vierte Schaltelement (S4) mindestens einmal ein- und auszuschalten,
und bei eingeschaltetem zweiten Schaltelement (S2) das dritte Schaltelement (S3) mindestens einmal ein- und auszuschalten.

2. Ladegerät (100) nach Anspruch 1, wobei die Gleichrichtungsschaltung (405) eine in Reihe geschaltete dritte Highside-Diode (412) und eine vierte Lowside-Diode (414) umfasst mit einem fünften Mittelabgriff (416) zwischen den Dioden (412, 414), welcher mit einem ersten Anschlusspol (110_1) des ersten Anschlusses verbunden ist,
wobei die in Reihe geschaltete dritte Highside-Diode (412) und vierte Lowside-Diode (414) dem ersten und zweiten Kondensator (422, 424) parallelgeschaltet ist und
wobei die dritte und die vierte Diode derart ausgerichtet sind, dass ein Strom von Lowside zu Highside ermöglicht wird
und wobei der erste Mittelabgriff (426) zwischen den Kondensatoren mit einem zweiten Anschlusspol (110_2) des ersten Anschlusses verbunden ist.

3. Ladegerät (100) nach Anspruch 1, wobei die Gleichrichtungsschaltung (405) einen Brückengleichrichter mit vier Dioden umfasst, welcher eingangsseitig mit einem ersten Anschlusspol (110_1) und einem zweiten Anschlusspol (110_2) des ersten Anschlusses verbunden ist, und ausgangsseitig zum zweiten Kondensator (424) parallelgeschaltet ist.

4. Ladegerät (100) nach einem der vorhergehenden Ansprüche, wobei der Primärschaltung (400) ein weiterer fünfter Zweig parallelgeschaltet ist, welcher einen dritten Kondensator (425) umfasst.

5. Ladegerät (100) nach einem der vorhergehenden Ansprüche, wobei zwischen den vierten Mittelabgriff (526) und den ersten Anschlusspol (156) der Sekundärwicklung ein vierter Kondensator (525) geschaltet ist.

6. Antriebsstrang (650) eines Fahrzeugs (600) mit einem Wechselrichter (640) und einer elektrischen Maschine (630), wobei der Antriebstrang mindestens ein Ladegerät (100) gemäß einem der Ansprüche 1 bis 5 umfasst.

7. Fahrzeug (600) mit einem Antriebsstrang (650) nach Anspruch 4.

8. Verfahren (700) zum Betrieb eines Ladegerätes (100) nach einem der Ansprüche 1 bis 3,
mit den Schritten:
Abwechselndes Ein- und Ausschalten (710) des zweiten und des ersten Schaltelementes (S2, S1),
wobei bei eingeschaltetem ersten Schaltelement (S1) (720) das vierte Schaltelement (S4) mindestens einmal eingeschaltet und ausgeschaltet wird und
wobei bei eingeschaltetem zweiten Schaltelement (S2) (730) das dritte Schaltelement (S3) mindestens einmal eingeschaltet und ausgeschaltet wird.

9. Computerprogramm, das eingerichtet ist, das Verfahren (700) nach Anspruch 8 auszuführen.

10. Maschinenlesbares Speichermedium, auf dem das Computerprogramm nach Anspruch 9 gespeichert ist.

## Claims

1. Charging device (100) having:
an input-side first terminal (110_1, 110_2) for connection to an electrical energy source (200),
an output-side second terminal (190_1, 190_2) for connection to a battery (300) to be charged,
a transformer (150), the primary winding (150_1) of which is electrically connected to the first terminal (110_1, 110_2) by means of a primary circuit (400) and the secondary winding (150_2) of which is electrically connected to the second terminal (190_1, 190_2) by means of a secondary circuit (500),
wherein the primary circuit (400) comprises a rectification circuit (405) and a parallel connection of two branches each having a high-side element and a low-side element, having:
a first branch which comprises a first and a second series-connected capacitor (422, 424) having a first centre tap (426) between the capacitors, which first centre tap is connected to a first connection pole (152) of the primary winding (150_1),
a second branch which comprises a series-connected first low-side switching element (S1) and a second series-connected high-side switching element (S2) having a second centre tap (436) between the switching elements, which second centre tap is connected to a second connection pole (154) of the primary winding (150_1),
wherein the intrinsic diodes of the first and of the second switching element (S1, S2) are aligned such that a flow from the low side to the high side is made possible,
**characterized in that**
the secondary circuit (500) comprises a parallel connection of two branches each having a high-side element and a low-side element, having:
a third branch which comprises a series connection of a first high-side diode (512) and of a third low-side switching element (S3) having a third centre tap (516) between the first diode and the third switching element, which third centre tap is connected to a second connection pole (158) of the secondary winding (150_2),
wherein the first diode (512) and the intrinsic diode of the third switching element (S3) are aligned such that a flow from the low side to the high side is made possible,
a fourth branch which comprises a series connection of a second high-side diode (522) and of a fourth low-side switching element (S4) having a fourth centre tap (526) between the second diode (522) and the fourth switching element (S4), which fourth centre tap is connected to a first connection pole (156) of the secondary winding (150_2),
wherein the second diode (522) and the intrinsic diode of the fourth switching element (S4) are aligned such that a flow from the low side to the high side is made possible,
wherein a first connection pole (190_1) of the second terminal (190_1, 190_2) is connected to the cathodes of the first and second diode (512, 522) and a second connection pole (190_2) of the second terminal (190_1, 190_2) is connected to the third and fourth switching elements (S3, S4) at the ends of the third and fourth branch,
wherein the charging device (100) is configured to
alternately switch the second and the first switching element (S2, S1) on and off during operation,
when the first switching element (S1) is switched on, switch the fourth switching element (S4) on and off at least once,
and when the second switching element (S2) is switched on, switch the third switching element (S3) on and off at least once.

2. Charging device (100) according to Claim 1, wherein the rectification circuit (405) comprises a series-connected third high-side diode (412) and a fourth low-side diode (414) having a fifth centre tap (416) between the diodes (412, 414), which fifth centre tap is connected to a first connection pole (110_1) of the first terminal,
wherein the series-connected third high-side diode (412) and fourth low-side diode (414) are connected in parallel with the first and second capacitor (422, 424) and
wherein the third and the fourth diode are aligned such that a flow from the low side to the high side is made possible,
and wherein the first centre tap (426) between the capacitors is connected to a second connection pole (110_2) of the first terminal.

3. Charging device (100) according to Claim 1, wherein the rectification circuit (405) comprises a bridge rectifier having four diodes, which bridge rectifier is connected, on its input side, to a first connection pole (110_1) and to a second connection pole (110_2) of the first terminal, and, on its output side, is connected in parallel with the second capacitor (424).

4. Charging device (100) according to one of the preceding claims, wherein a further, fifth branch is connected in parallel with the primary circuit (400), which branch comprises a third capacitor (425).

5. Charging device (100) according to one of the preceding claims, wherein a fourth capacitor (525) is connected between the fourth centre tap (526) and the first connection pole (156) of the secondary winding.

6. Drive train (650) of a vehicle (600) having an inverter (640) and an electrical machine (630), wherein the drive train comprises at least one charging device (100) according to one of Claims 1 to 5.

7. Vehicle (600) having a drive train (650) according to Claim 6.

8. Method (700) for operating a charging device (100) according to one of Claims 1 to 3,
having the steps:
alternately switching the second and the first switching element (S2, S1) on and off (710),
wherein, when the first switching element (S1) is switched on (720), the fourth switching element (S4) is switched on and switched off at least once and
wherein, when the second switching element (S2) is switched on (730), the third switching element (S3) is switched on and switched off at least once.

9. Computer program which is configured to perform the method (700) according to Claim 8.

10. Machine-readable storage medium on which the computer program according to Claim 9 is stored.

## Revendications

1. Appareil de charge (100) avec :
une première borne côté entrée (110_1, 110_2) destinée à être connectée à une source d'énergie électrique (200),
une seconde borne côté sortie (190_1, 190_2) destinée à être connectée à une batterie (300) à charger,
un transformateur (150), dont l'enroulement primaire (150_1) est connecté électriquement à la première borne (110_1, 110_2) par un circuit primaire (400) et dont l'enroulement secondaire (150_2) est connecté électriquement à la seconde borne (190_1, 190_2) par un circuit secondaire (500),
le circuit primaire (400) comprenant un circuit de redressement (405) et un branchement parallèle de deux branches à respectivement un élément côté haut et un élément côté bas, avec :
une première branche, qui comprend un premier et un deuxième condensateur (422, 424) branchés en série avec une première prise centrale (426) entre les condensateurs, laquelle est connectée à un premier pôle de borne (152) de l'enroulement primaire (150_1),
une seconde branche, qui comprend un premier élément de commutation côté bas (S1) branché en série et un deuxième élément de commutation côté haut (S2) branché en série, avec une seconde prise centrale (436) entre les éléments de commutation, laquelle est connectée à un second pôle de borne (154) de l'enroulement primaire (150_1),
les diodes intrinsèques du premier et du deuxième élément de commutation (S1, S2) étant orientées de telle manière qu'un courant du côté bas vers le côté haut est rendu possible,
**caractérisé en ce que**
le circuit secondaire (500) comprend un branchement parallèle de deux branches à respectivement un élément côté haut et un élément côté bas, avec :
une troisième branche, qui comprend un branchement en série d'une première diode côté haut (512) et d'un troisième élément de commutation côté bas (S3) à une troisième prise centrale (516) entre la première diode et le troisième élément de commutation, laquelle est connectée à un second pôle de borne (158) de l'enroulement secondaire (150_2),
la première diode (512) et la diode intrinsèque du troisième élément de commutation (S3) étant orientées de telle manière qu'un courant du côté bas vers le côté haut est rendu possible,
une quatrième branche, qui comprend un branchement en série d'une deuxième diode côté haut (522) et d'un quatrième élément de commutation côté bas (S4) à une quatrième prise centrale (526) entre la deuxième diode (522) et le quatrième élément de commutation (S4), laquelle est connectée à un premier pôle de borne (156) de l'enroulement secondaire (150_2),
la deuxième diode (522) et la diode intrinsèque du quatrième élément de commutation (S4) étant orientées de telle manière qu'un courant du côté bas vers le côté haut est rendu possible,
un premier pôle de borne (190_1) de la seconde borne (190_1, 190_2) étant connecté aux cathodes de la première et la deuxième diode (512, 522) et un second pôle de borne (190_2) de la seconde borne (190_1, 190_2) étant connecté aux troisième et au quatrième élément de commutation (S3, S4) sur les extrémités de la troisième et de la quatrième branche,
l'appareil de charge (100) étant mis au point pour
activer et désactiver lors du fonctionnement le deuxième et le premier élément de commutation (S2, S1) en alternance,
activer et désactiver au moins une fois le quatrième élément de commutation (S4) lorsque le premier élément de commutation (S1) est activé,
et pour activer et désactiver au moins une fois le troisième élément de commutation (S3) lorsque le deuxième élément de commutation (S2) est activé.

2. Appareil de charge (100) selon la revendication 1, le circuit de redressement (405) comprenant une troisième diode côté haut (412) branchée en série et une quatrième diode côté bas (414) avec une cinquième prise centrale (416) entre les diodes (412, 414), laquelle est connectée à un premier pôle de borne (110_1) de la première borne,
la troisième diode côté haut (412) et la quatrième diode côté bas (414) branchées en série étant branchées en parallèle au premier et au deuxième condensateur (422, 424), et
la troisième et la quatrième diode étant orientées de telle manière qu'un courant du côté bas vers le côté haut est rendu possible
et la première prise centrale (426) entre les condensateurs étant connectée à un second pôle de borne (110_2) de la première borne.

3. Appareil de charge (100) selon la revendication 1, le circuit de redressement (405) comprenant un redresseur en pont avec quatre diodes, lequel est connecté côté entrée à un premier pôle de borne (110_1) et à un second pôle de borne (110_2) de la première borne et est branché en parallèle au deuxième condensateur (424) côté sortie.

4. Appareil de charge (100) selon l'une des revendications précédentes, une cinquième branche supplémentaire, qui comprend un troisième condensateur (425), étant branchée en parallèle au circuit primaire (400).

5. Appareil de charge (100) selon l'une des revendications précédentes, un quatrième condensateur (525) étant branché entre la quatrième prise centrale (526) et le premier pôle de borne (156) de l'enroulement secondaire.

6. Chaîne cinématique (650) d'un véhicule (600) avec un onduleur (640) et une machine électrique (630), la chaîne cinématique comprenant au moins un appareil de charge (100) selon l'une des revendications 1 à 5.

7. Véhicule (600) avec une chaîne cinématique (650) selon la revendication 6.

8. Procédé (700) destiné à faire fonctionner un appareil de charge (100) selon l'une des revendications 1 à 3,
avec les étapes :
activation et désactivation (710) en alternance du deuxième et du premier élément de commutation (S2, S1),
le quatrième élément de commutation (S4) étant activé et désactivé au moins une fois lorsque le premier élément de commutation (S1) est activé (720) et
le troisième élément de commutation (S3) étant activé et désactivé au moins une fois lorsque le deuxième élément de commutation (S2) est activé (730).

9. Programme informatique, qui est mis au point pour exécuter le procédé (700) selon la revendication 8.

10. Support de stockage lisible par machine, sur lequel est stocké le programme informatique selon la revendication 9.
